# EUROPEAN PATENT SPECIFICATION

(11) **EP 2 446 617 B1**
(45) Date of publication and mention of the grant of the patent: **01.04.2015**
(21) Application number: 10724536.7
(22) Date of filing: 22.06.2010
(51) Int. Cl.: H04N 5/64, G06F 1/16, H05K 5/02, G02F 1/13357

(54) **CHASSIS CONSTRUCTION FOR TELEVISION RECEIVERS**
CHASSISKONSTRUKTION FÜR FERNSEHEMPFÄNGER
CONSTRUCTION DE CHASSIS POUR RECEPTEURS DE TELEVISION

(30) Priority: 23.06.2009 TR 200904852
(43) Date of publication of application: 02.05.2012
(73) Proprietor: Arçelik Anonim Sirketi, 34950 Istanbul (TR)
(72) Inventor: AVCI, Serdal Korkut, 34950 Istanbul (TR); ELBAY, Murat Kubilay, 34950 Istanbul (TR); GULER, Cemal, 34950 Istanbul (TR)
(74) Representative: Louis Pöhlau Lohrentz
(86) International application number: PCT/EP2010/058841
(87) International publication number: WO 2010/149665

(56) References cited:
- EP-A2- 0 821 385
- US-A1- 2003 117 063
- 'Capacitor Discharge (CD) Weld Studs', [Online] 27 March 2009, XP055078467 Retrieved from the Internet: <URL:http://web.archive.org/web/20090327015 442/http://www.weldstud.com/cdproducts.html > [retrieved on 2013-09-10]
- 'Stud Welding - Wikipedia, 31 March 2009', [Online] 31 March 2009, XP055078577 Retrieved from the Internet: <URL:http://en.wikipedia.org/w/index.php?ti tle=Stud_welding&oldid=280907954> [retrieved on 2013-09-10]
- 'Stud welding full catalogue', [Online] 13 March 2006, XP055108693 Retrieved from the Internet: <URL:https://web.archive.org/web/2006031308 4520/http://www.studwelding.com/pdf/full.pd f> [retrieved on 2014-03-18]
- TONG H ET AL: "HIGH SPEED WELDING OF ALUMINIUM ALLOY SHEETS WITH USING THE LASER/AC PULSED MIG HYBRID PROCESS", WELDING INTERNATIONAL, TAYLOR & FRANCIS, ABINGDON, GB, vol. 19, no. 2, 1 January 2005 (2005-01-01), pages 89-99, XP001239801, ISSN: 0950-7116, DOI: 10.1533/WINT.2005.3374
- FUJIMOTO M ET AL: "DEVELOPMENT OF FRICTION SPOT JOINING", WELDING IN THE WORLD, ELSEVIER / INTERNATIONAL INSTITUTE OF WELDING, ROISSY, FR, vol. 49, no. 3/04, 1 March 2005 (2005-03-01), pages 18-21, XP001239390, ISSN: 0043-2288
- TAKEMOTO T ET AL: "CHEMICAL REACTION OF NON-CORROSIVE FLUX WITH MAGNESIUM CONTAINING ALUMINIUM ALLOYS AND THE IMPROVEMENT OF BRAZEABILITY", WELDING INTERNATIONAL, TAYLOR & FRANCIS, ABINGDON, GB, vol. 11, no. 11, 1 January 1997 (1997-01-01), pages 845-851, XP000703668, ISSN: 0950-7116
- ANONYMOUS: 'Aluminium Propeller Plate', [Online] 18 March 2014, XP055108778 Retrieved from the Internet: <URL:http://www.rcr.com.au/metalmate/alumin ium-propeller-plate> [retrieved on 2014-03-18]

## Description

The present invention relates to a television wherein electronic circuit cards are mounted to the rear side of the flat display device.

The television (A), for example, the plasma, LCD or OLED-type television comprises electronic circuit cards (C) that are disposed into a cabinet (B) consisting of the front frame (F) and back cover (G); display device (D) and brackets (E). The circuit card comprising circuits and elements that control the basic functions of the television and form video signals from the received signals is referred to as the main circuit card. The circuit card comprising circuits and elements that provide the suitable power required for the operation of the television from the power received from the mains is referred to as the power supply circuit card. Apart from the main circuit card and the power supply circuit card, electronic circuit cards performing different functions are also present. The display device comprises a display panel, for example a plasma, liquid crystal or OLED display panel, and a chassis, to which the display panel is fixed and which is preferably produced from metal, for example, aluminum. The display panel is fixed to the front side of the chassis and the electronic circuit cards to the rear side of the chassis. Electronic circuit cards are mounted to the rear side of the chassis by using brackets. Television manufacturers obtain display devices from different manufacturers as end products. The back cover of the television is designed according to the position of electronic circuit cards. Changing the position of electronic circuit cards for different display devices require the design of the back cover to be changed. Therefore, television manufacturers are required to design separate bracket structures for different display devices in order to keep the position of electronic circuit cards for different display devices they use fixed.

Televisions, furthermore, comprise one or more carriers. Carrier is a stand that holds the television upright and in balance in the situation when the television is used on a horizontal ground. Carrier is a hanging means that provides the television to be fixed and carries the television in the situation when the television is used on a vertical ground.

The state of the art United States of America Patent Applications No US2005/068261, US2006/192730 and US2008/252557 comprise bosses that provide fixing to the rear side of the display device chassis. The bosses described in the said patent applications are used for fixing the circuit cards controlling the display panel. Bosses are formed on the chassis by the deep drawing method or fixed to the chassis by the press method. This process is performed before the display panel is disposed onto the chassis.

The aim of the present invention is the realization of a television wherein it is provided that fixation to the rear side of the display device is performed easily.

In the television realized in order to attain the aim of the present invention, explicated in the first claim and the respective claims thereof, the electronic circuit cards and/or carrier are fastened to the fixing means. The fixing means is welded to the chassis of the display device, which is obtained as end product, by the television manufacturer.

The electronic circuit card or carrier is fixed to the body of the fixing means. For this purpose, the body is grooved on the inside or outside or configured as a pin. A base, the radius of which is greater than the radius of the body, is situated under the body. A protrusion which melts during the welding process is situated under the base. After the protrusion is molten, the base is seated onto the chassis, to which it is welded.

The length of the fixing means is determined according to the element that will be fixed thereon. In order to prevent the electronic circuit card, which is disposed between the back cover and the chassis, from contacting the back cover, the length of some of the fixing means does not reach the back cover. For providing the assembly of the carrier assembled from the outside of the back cover, the length of some of the fixing means extends at least to the back cover.

In the situation when the chassis surrounds the display panel from the sides, it is possible to weld the fixing means to the chassis portions that surround the display panel from the sides. Thus, it is possible to assembly the front frame, which surrounds the display device from the sides, to the chassis.

In the assembly of the television of the present invention, the television manufacturer determines the positions, wherein the fixing means will be welded on the chassis, according to the position of the electronic circuit cards and carrier. The fixing means are welded to the determined positions by the arc welding method. The electronic circuit cards and stand are fastened to the chassis by means of the fixing means. Thus, the television manufacturer, who welds the fixing means to the desired positions, is able to fix the electronic circuit card or carrier to the display device even if no fixing structure is found in the used display device.

The television realized in order to attain the aim of the present invention is illustrated in the attached figures, where:

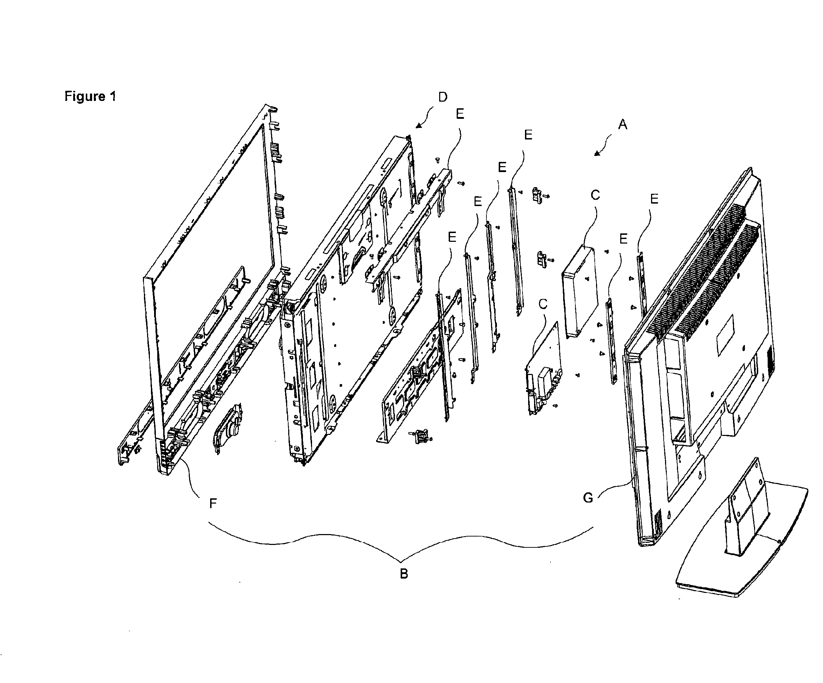

Figure 1 - is the exploded perspective view of a television in the prior art.

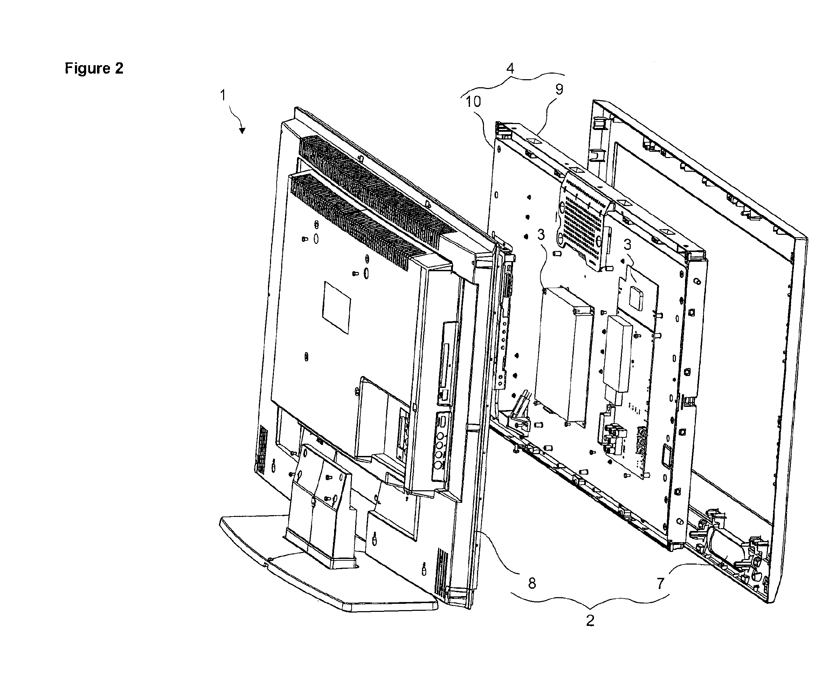

Figure 2 - is the exploded view of a television.

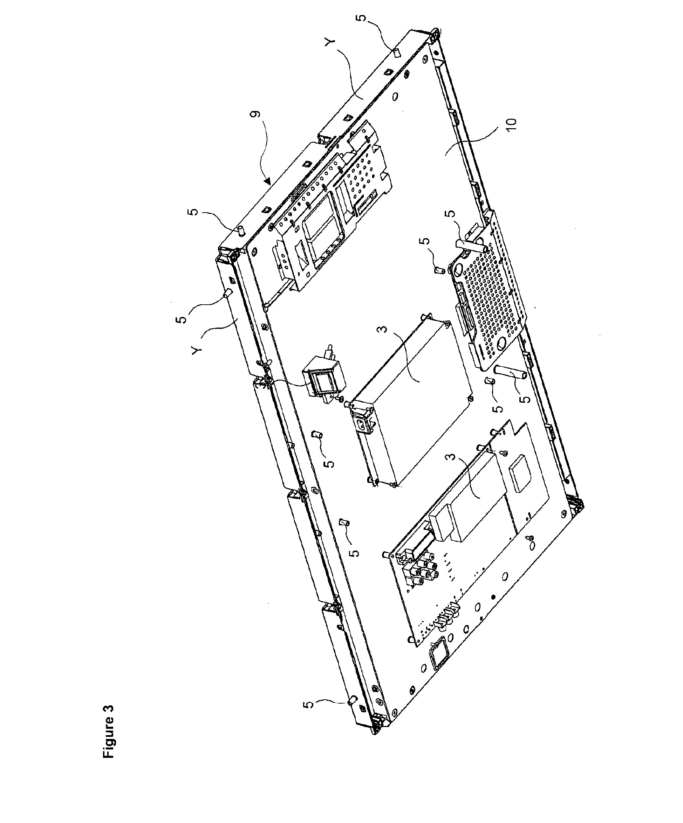

Figure 3 - is the perspective view of a display device, to the rear portion of which electronic circuit cards are fixed.
Figure 4 - is the perspective view of a fixing means in an embodiment of the present invention.
Figure 5 - is the front view of a fixing means in another embodiment of the present invention.
Figure 6 - is the front view of a fixing means in yet another embodiment of the present invention.
Figure 7 - is the exploded view of a television comprising a stand in an embodiment of the present invention.
Figure 8 - is the exploded view of a television comprising hanging means in an embodiment of the present invention.

The elements illustrated in the figures are numbered as follows:
1. Television
2. Cabinet
3. Electronic circuit card
4. Display device
5. Fixing means
6. Carrier
7. Front frame
8. Back cover
9. Display panel
10. Chassis
11. Body
12. Base
13. Protrusion

A television (1) comprises
- a cabinet (2) having a front frame (7) and a back cover (8),
- at least one electronic circuit card (3) performing the functions during its operation, and
- a display device (4).

The display device (4) comprises a display panel (9) whereon image is generated and a chassis (10). The display panel (9) is a liquid crystal, plasma or OLED display panel. The chassis (10) is shaped as a plate that is produced from metal and that covers the rear side of the display panel (9). The chassis (10) provides the structural strength of the display device (4) and enables various elements to be fixed thereon. The display panel (9) is fixed to one side of the chassis (10).

The display device (4) is disposed between the front frame (7) and the back cover (8). The front frame (7) surrounds the display device (4) from the front and from the sides. The front frame (7) is fastened to the display device (4). The back cover (8) surrounds the display device (4) from the back.

The television (1), furthermore, comprises at least one carrier (6) that performs the functions of fixing and carrying on a horizontal or vertical ground.

The television (1) comprises at least one fixing means (5) which provides the electronic circuit cards (3) and/or carrier (6) to be fixed to the chassis (10), to the front side of which the display panel (9) is integrated, and which is fastened to the chassis (10) by welding. The television manufacturer fastens the fixing means (5) to the positions determined by the manufacturer himself on the chassis (10) of the display device (4) that is supplied as end product, by welding. Thus, the television manufacturer is not required to change the position of the electronic circuit cards (3) and/or carrier (6) in the situation when the manufacturer changes the display device (4) used.

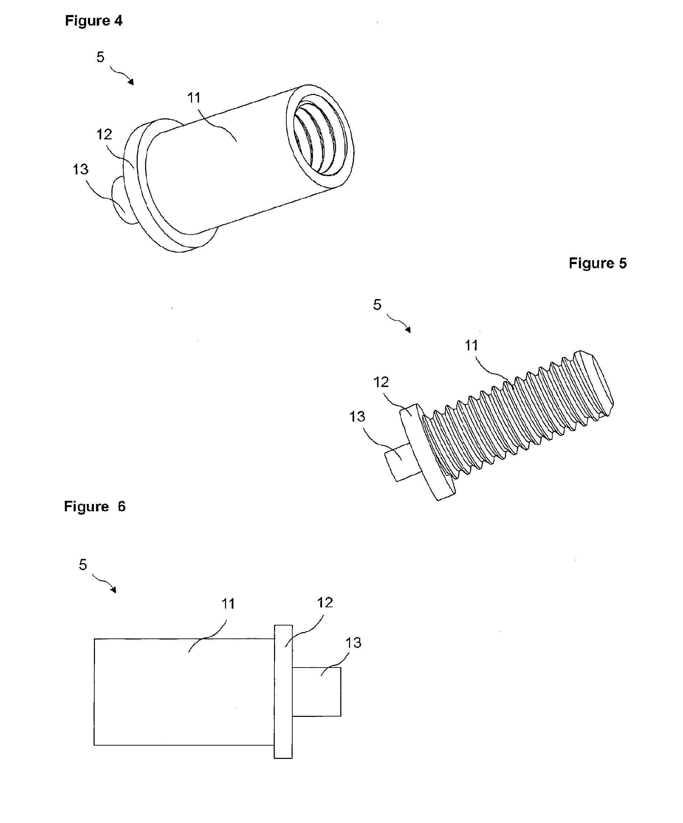

In an embodiment of the present invention, the fixing means (5) comprises a body (11) to which the electronic circuit cards (3) and/or carrier (6) is fixed. In order that fixing can be performed, the body (11) is grooved on the inside, grooved on the outside or shaped as a pin (Figure 4, Figure 5 and Figure 6).

In another embodiment of the present invention, the fixing means (5) comprises a base (12), the radius of which is greater than the radius of the body (11) (Figure 4, Figure 5 and Figure 6).

In another embodiment of the present invention, the fixing means (5) comprises a preferably cylindrical protrusion (13) which melts during the welding process (Figure 4, Figure 5 and Figure 6). When the protrusion (13) is molten, the base (12) is seated onto the chassis (10).

The fixing means (5) is fastened to the chassis (10) of the display device (4) that is supplied as end product, by arc welding. The arc welding process is realized by means of a device that operates by the capacitor discharge method. The protrusion (13) is brought to the position wherein fixing on the chassis (10) will be performed. Then, the energy of the charged capacitors is discharged as high current pulse. Thus, the arc being formed between the protrusion (13) and the chassis (10) melts the protrusion (13), and the chassis (10) and fixing means (5) are welded. While the welding process is being performed, the weld penetration depth is less than the wall thickness of the chassis (10). Thus, no mark is left under the area wherein the fixing means (5) is welded.

In an embodiment of the present invention, the fixing means (5) has a length that enables the electronic circuit card (3) to be disposed between the chassis (10) and the back cover (8).

In another embodiment of the present invention, the length of the fixing means (5) extends at least to the back cover (8). Thus, the carrier (6) is enabled to be fixed such that the back cover (8) will remain between the carrier (6) and the chassis (10).

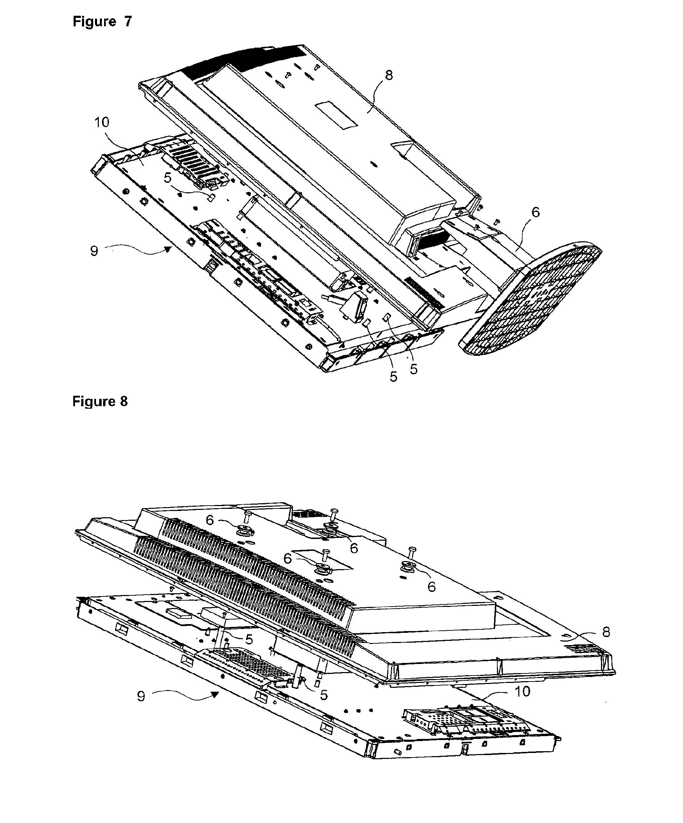

In an embodiment of the present invention, the carrier (6) is a stand, which provides the balance of the television (1) and performs the function of carrying, on a horizontal ground, for example on a table. The carrier (6) is fixed to the chassis (10) by means of the fixing means (5). The television (1) comprises screw holes which are situated on the back cover (8) and carrier (6), and which are concentric with the fixing means (5). The carrier (6) is seated onto the back cover (8). The screws passing through the screw holes and reaching the fixing means (5) are fixed to the television (1) through the carriers (6) such that the back cover (8) will remain between the chassis (10) and the carrier (6) (Figure 7).

In another embodiment of the present invention, the carrier (6) is a hanging means that provides the television (1) to be fixed and carried on a vertical ground, for example on wall. The carrier (6) is fixed to the chassis (10) by means of the fixing means (5). The carrier (6) is screwed to the television (1) through the screw hole concentric with the fixing means (5) on the back cover (8) such that the back cover (8) will remain between the chassis (10) and the carrier (6) (Figure 8).

In an embodiment of the present invention, the chassis (10) surrounds the display panel (9) from the sides. The fixing means (5) is welded to the chassis (10) portions (Y) that surround the display panel (9) from the sides. Thus, it is possible to fasten the front frame (7), which surrounds the display device (4) from the sides, to the chassis (10).

The television (1) of the present invention is assembled according to the following steps:
- determining the position wherein the fixing means (5) will be welded on the chassis (10) of the display device (4), to the front side of which the display panel (9) is integrated,
- welding the fixing means (5) to the chassis (10) by means of the arc generated as a result of the applied electric current,
- fixing the electronic circuit card (3) or carrier (6) to the chassis (10) by means of the fixing means (5).

By the present invention, by means of the fixing means (5) fastened to the chassis (10) by the arc welding method, television manufacturers have the flexibility to fix the electronic circuit cards (3) and/or carrier (6) to the positions determined by them on the display device (4). Furthermore, since the utilization of brackets is eliminated, the material cost of the television (1) is reduced, the assembly time thereof is shortened and the weight thereof is reduced.

It is to be understood that the present invention is not limited to the embodiments disclosed above and a person skilled in the art can easily introduce different embodiments. These should be considered within the scope of the protection postulated by the claims of the present invention.

## Claims

1. A method for assembling a television (1), the television (1) comprising a cabinet (2) that has a front frame (7) and a back cover (8), at least one electronic circuit card (3) that performs the functions during its operation, a display device (4) that has a display panel (9) whereon image is generated and a chassis (10), at least one carrier (6) that provides the television (1) to be fixed and carried on a horizontal or vertical ground, a first fixing means (5) that provides the at least one electronic circuit card (3) to be fixed to the chassis (10) and a second fixing means (5) that provides the carrier (6) to be fixed to the chassis (10), to the front side of which the display panel (9) is integrated, wherein the method includes that the first and second fixing means (5) are fastened to the chassis (10) by the arc welding method, with the method for assembling a television (1) comprising the following steps:
- determining the position where the first and second fixing means (5) will be welded on the chassis (10) of the display device (4), to the front side of which the display panel (9) is integrated,
- welding the first and second fixing means (5) to the chassis (10) by means of the arc generated as a result of the applied electric current,
- fixing the at least one electronic circuit card (3) or the carrier (6) to the chassis (10) by means of the first and second fixing means (5),
**characterized in that** the first and second fixing means (5) are welded to the chassis (10) and the first and second fixing means (5) have a protrusion (13) which provides the first and second fixing means (5) to be welded to the chassis (10) by melting of said protrusion (13) when electric current is applied in the arc welding method and that the first fixing means has a length that enables the electronic circuit card (3) to be disposed between the chassis (10) and the back cover (8) and that the length of the second fixing means extends at least to the back cover (8) in order that the back cover (8) is fixed such that it will remain between the carrier (6) and the chassis (10).

2. A method for assembling a television (1) as in Claim 1, **characterized by** the first and the second fixing means (5) that comprise a body (11), to which the at least one electronic circuit card (3) and/or carrier (6) are fixed.

3. A method for assembling a television (1) as in Claim 2, **characterized by** the first and second fixing means (5) that have a base (12), the radius of which is greater than the radius of the body (11).

4. A method for assembling a television (1) as in any one of the claims between Claims 2 to 3, **characterized by** the first and second fixing means (5) that have a body (11), inside of which is grooved.

5. A method for assembling a television (1) as in any one of the claims between Claims 2 to 3, **characterized by** the first and second fixing means (5) that have a body (11), outside of which is grooved.

6. A method for assembling a television (1) as in any one of the claims between Claims 2 to 3, wherein the first and second fixing means (5) that have a body (11) shaped as a pin.

7. A method for assembling a television (1) as in any one of the above claims, in which the television further comprises a third fixing means (5) which is welded to the chassis (10) portions (Y) that surround the display panel (9) from the side in order that the front frame (7) surrounding the display device (4) from the sides is fastened to the chassis (10).

## Patentansprüche

1. Verfahren zum Zusammenbauen eines Fernsehers (1), wobei der Fernseher (1) einen Schrank (2) mit einem Vorderrahmen (7) und einer Rückseitenabdeckung (8), wenigstens eine Karte mit elektronischen Schaltkreisen (3), die während ihres Betriebs Funktionen ausführt, eine Anzeigevorrichtung (4) mit einem Anzeigefeld (9), auf dem ein Bild erzeugt wird, und einem Gehäuse (10), wenigstens einen Träger (6), der dafür sorgt, dass der Fernseher (1) an einer horizontalen oder vertikalen Oberfläche befestigt und getragen wird, ein erstes Befestigungsmittel (5), die dafür sorgt, dass die wenigstens eine Karte mit elektronischen Schaltkreisen (3) am Gehäuse (10) befestigt wird, und ein zweites Befestigungsmittel (5) aufweist, das dafür sorgt, dass der Träger (6) am Gehäuse (10) befestigt wird, an dessen Vorderseite das Anzeigefeld (9) integriert wird, wobei das Verfahren einschließt, dass das erste und das zweite Befestigungsmittel (5) durch Lichtbogenschweißverfahren am Gehäuse (10) befestigt werden, wobei das Verfahren zum Zusammensetzen eines Fernsehers (1) die folgenden Schritte umfasst:
- Bestimmen der Position, an der das erste und das zweite Befestigungsmittel (5) an das Gehäuse (10) der Anzeigevorrichtung (4) geschweißt werden, an dessen Vorderseite das Anzeigefeld (9) integriert ist,
- Schweißen des ersten und des zweiten Befestigungsmittels (5) an das Gehäuse (10) mithilfe des aufgrund des angelegten elektrischen Stroms erzeugten Lichtbogens,
- Befestigen der wenigstens einen Karte mit elektronischen Schaltkreisen (3) oder des Trägers (6) am Gehäuse (10) mithilfe des ersten und zweiten Befestigungsmittels (5), **dadurch gekennzeichnet, dass** das erste und das zweite Befestigungsmittel (5) an das Gehäuse (10) geschweißt werden und dass das erste und das zweite Befestigungsmittel (5) einen Vorsprung (13) aufweisen, der dafür sorgt, dass das erste und das zweite Befestigungsmittel (5) an das Gehäuse (10) geschweißt werden, indem der Vorsprung (13) geschmolzen wird, wenn im Lichtbogenverfahren elektrischer Strom angelegt wird, und **dass** das erste Befestigungsmittel eine Länge aufweist, die es der Karte mit elektronischen Schaltkreisen (3) ermöglicht, zwischen dem Gehäuse (10) und der Rückseitenabdeckung (8) angeordnet zu werden, und **dass** die Länge des zweiten Befestigungsmittel sich wenigstens bis zur Rückseitenabdeckung (8) erstreckt, damit die Rückseitenabdeckung (8) derart befestigt wird, dass sie zwischen dem Träger (6) und dem Gehäuse (10) bleibt.

2. Verfahren zum Zusammensetzen eines Fernsehers (1) nach Anspruch 1, **dadurch gekennzeichnet, dass** das erste und das zweite Befestigungsmittel (5) einen Gehäusekörper (11) umfassen, an dem die wenigstens eine Karte mit elektronischen Schaltkreisen (3) und/oder der Träger (6) befestigt werden.

3. Verfahren zum Zusammensetzen eines Fernsehers (1) nach Anspruch 2, **dadurch gekennzeichnet, dass** das erste und das zweite Befestigungsmittel (5) eine Basis (12) aufweisen, deren Radius größer als der Radius des Gehäusekörpers (11) ist.

4. Verfahren zum Zusammensetzen eines Fernsehers (1) nach einem der Ansprüche 2 bis 3, **dadurch gekennzeichnet, dass** das erste und das zweite Befestigungsmittel (5) einen Gehäusekörper (11) aufweisen, dessen Inneres eine Nut aufweist.

5. Verfahren zum Zusammensetzen eines Fernsehers (1) nach einem der Ansprüche 2 bis 3, **dadurch gekennzeichnet, dass** das erste und das zweite Befestigungsmittel (5) einen Gehäusekörper (11) aufweisen, dessen Äußeres eine Nut aufweist.

6. Verfahren zum Zusammensetzen eines Fernsehers (1) nach einem der Ansprüche 2 bis 3, **dadurch gekennzeichnet, dass** das erste und das zweite Befestigungsmittel (5) einen Gehäusekörper (11) aufweisen, der zapfenförmig ist.

7. Verfahren zum Zusammensetzen eines Fernsehers (1) nach einem der vorangehenden Ansprüche, wobei der Fernseher ferner ein drittes Befestigungsmittel (5) umfasst, das an die Abschnitte (Y) des Gehäuses (10) geschweißt sind, die das Anzeigefeld (9) von der Seite umgeben, damit der Vorderrahmen (7), der die Anzeigevorrichtung (4) von den Seiten umgibt, am Gehäuse (10) befestigt wird.

## Revendications

1. Un procédé pour l'assemblage d'une télévision (1), la télévision (1) comprenant une enveloppe (2) qui présente un cadre avant (7) et un couvercle arrière (8), au moins une carte de circuit électronique (3) qui effectue les fonctions au cours de son fonctionnement, un dispositif d'affichage (4) qui présente un panneau d'affichage (9) sur lequel les images sont générées et un châssis (10), au moins un support (6) qui permet à la télévision (1) d'être fixée et supportée sur un terrain horizontal ou vertical, un premier moyen de fixation (5) qui permet la fixation de la carte de circuit électronique (3) au châssis (10), et un deuxième moyen de fixation (5) qui permet la fixation du support (6) au châssis (10) au côté avant duquel le panneau d'affichage (9) est intégré, où le procédé comprend le fait que les premier et deuxième moyens de fixation (5) sont fixés au châssis (10) par le soudage à l'arc, le procédé pour l'assemblage d'une télévision (1) comprenant les étapes suivantes :- déterminer la position où les premier et deuxième moyens de fixation (5) seront soudés sur le châssis (10) du dispositif d'affichage (4), au côté avant duquel le panneau d'affichage (9) est intégré,
- souder les premier et deuxième moyens de fixation (5) au châssis (10) par l'arc généré à la suite du courant électrique appliqué,
- fixer la carte de circuit électronique (3) ou le support (6) au châssis (10) par les premier et deuxième moyens de fixation (5),
**caractérisé en ce que** les premier et deuxième moyens de fixation (5) sont soudés au châssis (10) et les premier et deuxième moyens de fixation (5) présentent une protubérance (13) qui permet aux premier et deuxième moyens de fixation (5) d'être soudés au châssis (10) en fondant ladite protubérance (13) lorsque le courant électrique est appliqué dans le procédé du soudage à l'arc et **en ce que** le premier moyen de fixation présente une longueur qui permet à la carte de circuit électronique (3) d'être disposée entre le châssis (10) et le couvercle arrière (8) et **que** la longueur du deuxième moyen de fixation s'étend au moins jusqu'au couvercle arrière (8) afin que le couvercle arrière (8) est fixé de manière à rester entre le support (6) et le châssis (10).

2. Un procédé pour l'assemblage d'une télévision (1) selon la Revendication 1, **caractérisé par** les premier et deuxième moyens de fixation (5) qui comprennent un corps (11), auquel la carte de circuit électronique (3) et/ou le support (6) est/sont fixé(s).

3. Un procédé pour l'assemblage d'une télévision (1) selon la Revendication 2, **caractérisé par** les premier et deuxième moyens de fixation (5) qui présentent une base (12), dont le rayon est supérieur au rayon du corps (11).

4. Un procédé pour l'assemblage d'une télévision (1) selon l'une quelconque des revendications de 2 à 3, **caractérisé par** les premier et deuxième moyens de fixation (5) qui présentent un corps (11) avec un intérieur rainuré.

5. Un procédé pour l'assemblage d'une télévision (1) selon l'une quelconque des revendications de 2 à 3, **caractérisé par** les premier et deuxième moyens de fixation (5) qui présentent un corps (11) avec un extérieur rainuré.

6. Un procédé pour l'assemblage d'une télévision (1) selon l'une quelconque des revendications de 2 à 3, **caractérisé par** les premier et deuxième moyens de fixation (5) qui présentent un corps (11) en forme de goupille.

7. Un procédé pour l'assemblage d'une télévision (1) selon l'une quelconque des revendications précédentes, où la télévision comprend en outre un troisième moyen de fixation (5) qui est soudé aux parties (Y) du châssis (10) qui entourent le panneau d'affichage (9) par le côté afin que le cadre avant (7) entourant le dispositif d'affichage (4) par les côtés est fixé au châssis (10).
